# EUROPÄISCHE PATENTANMELDUNG

(11) **EP 1 384 657 A1**
(43) Veröffentlichungstag der Anmeldung: **28.01.2004**
(21) Anmeldenummer: 03016135.0
(22) Anmeldetag: 16.07.2003
(51) Int. Cl.: B62D 33/06

(54) **Kabinenlagerung für eine Fahrzeugkabine**

(30) Priorität: 19.07.2002 DE 10232909
(71) Anmelder: DEERE & COMPANY, Moline, Illinois 61265-8098 (US); Bernhardt, Gerd, Prof.Dr.-Ing.habil., 01728 Hänichen (DE); Fedotov, Sergiy, Dipl.-Ing., 01069 Dresden (DE); Rudik, Ruslan, Dipl.-Ing., 01069 Dresden (DE)
(72) Erfinder: Bernhard, Gerd, Prof.Dr.-Ing.habil., 01728 Hänichen (DE); Fedotov, Sergiy, Dipl.-Ing., 01069 Dresden (DE); Rudik, Ruslan, Dipl.-Ing., 01069 Dresden (DE)
(74) Vertreter: Lau-Loskill, Philipp, Dipl.-Phys.

(57) **Zusammenfassung**

Es wird eine Kabinenlagerung zur schwingungsgedämpften und/oder zur verstellbaren Abstützung einer Fahrzeugkabine (18) auf einem Fahrzeugchassis (10) beschrieben, die mehrere als Federdämpfungselemente und/oder Verstellelemente ausgebildete, in ihrer Länge veränderlichen Verbindungselementen (22, 24, 26, 28, 30, 32) enthält.

Um bei reduziertem technischen Aufwand die Federungseigenschaften zu verbessern und eine allachsige Federung der Fahrzeugkabine sowie eine möglichst saubere Trennung der Schwingungen zu ermöglichen, wird vorgeschlagen, dass sich die Fahrzeugkabine (18) über mindestens sechs Verbindungselemente (22, 24, 26, 28, 30, 32), deren jeweils erstes Ende gelenkig mit dem Fahrzeugchassis (10) und deren jeweils zweites Ende gelenkig mit der Fahrzeugkabine (18) in Verbindung steht, an dem Fahrzeugchassis (10) abstützt. Die Verbindungselemente (22, 24, 26, 28, 30, 32) sollen dabei in geschlossenen kinematischen Ketten und in Gruppen von jeweils wenigstens zwei konvergent zueinander ausgerichteten Verbindungselementen (22, 24, 26, 28, 30, 32) derart angeordnet werden, dass eine aktive und/oder passive Federdämpfung der Fahrzeugkabine (18) in sechs Freiheitsgraden möglich ist.

## Beschreibung

Die Erfindung betrifft eine Kabinenlagerung zur schwingungsgedämpften Abstützung einer Fahrzeugkabine auf einem Fahrzeugchassis mit mehreren als Federdämpfungselemente ausgebildeten längenveränderlichen Verbindungselementen. Für eine verstellbare Abstützung der Fahrzeugkabine können auch Verbindungselemente verwendet werden, die als in ihrer Länge aktiv einstellbare Verstellelemente ausgebildet sind.

Gefederte Kabinenlagerungen dienen dazu Schwingungen und Vibrationen, die von der Fahrbahn oder von dem Antriebsstrang herrühren zu isolieren und zu dämpfen, um die Fahrsicherheit und den Fahrkomfort für die Bedienungsperson zu erhöhen und Ermüdungen vorzubeugen. Es sind vielfältige Kabinenfederungssysteme bekannt. Beispielsweise werden zur Aufnahme von äußeren Stößen elastische Gummidämpfer verwendet. Zur Steigerung des Komforts kommen auch im Wesentlichen vertikal ausgerichtete Stossdämpfer und Schraubenfedern zum Einsatz, wobei die seitliche Stabilisierung durch zwischen der Kabine und dem Fahrzeugchassis angelenkte Lenker gewährleistet wird (EP-A-0 273 796).

In der US-A-6,273,203 wird eine landwirtschaftliche Maschine beschrieben, bei der zwischen dem Fahrzeugrahmen und der Fahrzeugkabine Federungsmittel angeordnet sind. Diese enthalten mehrere vertikal ausgerichtete Hydraulikzylinder, die in Abhängigkeit von Kippwinkelsensorsignalen ansteuerbar sind, um die Kabine relativ zum Fahrzeugrahmen zu verkippen und die Fahrzeugkabine in horizontaler Lage zu halten, wenn sich das Fahrzeug über hügeliges Gelände bewegt. Zwischen den Hydraulikzylindern und der Fahrzeugkabine sind elastische Aufnahmen angeordnet, um Vibrationen mittlerer und hoher Frequenz zu dämpfen. Die Federungsmittel sind nicht geeignet, um horizontale Schwingungen zu dämpfen.

Aus der DE-A-27 08 477 geht ein Federsystem für das Fahrerhaus eines Nutzfahrzeuges hervor, welches das Fahrerhaus gegenüber einem Fahrzeugrahmen abstützt. Das Fahrerhaus ist gegenüber dem Rahmen mit zwei Paar an den vier Ecken des Fahrerhauses angreifenden Hubfederelementen abgestützt, die so eingestellt sind, dass ihre Wirkungslinien sich paarweise in einer Querachse schneiden, die durch die Augenhöhe der Insassen geht. Dabei schneiden sich die Hubfederelemente paarweise in vertikalen Längsebenen, die durch ihre Anlenkpunkte verlaufen. Gemäss einer anderen in der DE-A-27 08 477 beschriebenen Ausbildung sind die Hubfederelemente so eingestellt, dass sich ihre Wirkungslinien sämtlich im Schwerpunkt des Fahrerhauses schneiden. Die Hubfederelemente dienen im Wesentlichen der vertikalen Abstützung des Fahrerhauses. Für eine Abstützung in horizontaler Fahrzeuglängsrichtung werden insgesamt vier Federn verwendet, die sich einerseits am Fahrerhaus abstützen und andererseits zwei Anlenkpunkte von fahrzeugrahmenfesten Koppelfederelementen einspannen. Auf ähnliche Weise erfolgt eine Abstützung in horizontaler Querrichtung des Fahrzeugs durch vier weitere Federn. Für eine Abstützung des Fahrerhauses in alle drei Richtungen sind somit zwölf Federelemente erforderlich. Dies hat einen erheblichen konstruktiven Aufwand zur Folge. Elemente zur Dämpfung der Schwingungsbewegungen werden in der DE-A-27 08 477 nicht beschrieben.

Die der Erfindung zugrunde liegende Aufgabe wird darin gesehen, eine Kabinenlagerung der eingangs genannten Art anzugeben, durch welche die vorgenannten Probleme überwunden werden. Insbesondere sollen bei reduziertem technischen Aufwand die Federungseigenschaften verbessert werden. Dabei soll eine allachsige Federung der Fahrzeugkabine und eine möglichst saubere Trennung der Schwingungen möglich sein.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die erfindungsgemäße Kabinenlagerung dient der schwingungsgedämpften bzw. schwingungstilgenden und/oder zur verstellbaren Abstützung einer Fahrzeugkabine auf einem Fahrzeugchassis oder Fahrzeugrumpf und enthält mehrere als Federdämpfungselemente und/oder Verstellelemente ausgebildete, in ihrer Länge veränderliche Verbindungselementen. Die Fahrzeugkabine stützt sich über mindestens sechs Verbindungselemente, deren jeweils erstes Ende gelenkig mit dem Fahrzeugchassis und deren jeweils zweites Ende gelenkig mit der Fahrzeugkabine in Verbindung steht, an dem Fahrzeugchassis ab. Dabei sind die Verbindungselemente in geschlossenen kinematischen Ketten und in Gruppen von jeweils wenigstens zwei konvergent zueinander ausgerichteten Verbindungselementen derart angeordnet, dass eine aktive und/oder passive Federdämpfung der Fahrzeugkabine in sechs Freiheitsgraden möglich ist.

Bei der erfindungsgemäßen Kabinenlagerung sind vorzugsweise sechs Verbindungselemente in drei geschlossenen kinematischen Ketten derart angeordnet, dass sich die Fahrzeugkabine gegenüber dem Fahrzeugrumpf in sechs Freiheitsgraden bewegen lässt. Es handelt sich hierbei um eine parallel strukturierte Anordnung, deren theoretische Grundlagen in "Kinematik und Robotik" von Manfred Husty, Adolf Karger, Hans Sachs, Waldemar Steinhilper, x.Springer-Verlag Berlin Heidelberg New York (1997), Seiten 491 - 524, ISBN 3-540-63181 erörtert werden. Eine geschlossene kinematische Kette ist ein Getriebe bestehend aus Gliedern (Beinen) und Gelenken, bei dem die Kettenendpunkte an einem gemeinsamen Grundkörper angelenkt sind. Im vorliegenden Fall bilden vorzugsweise jeweils zwei Verbindungselemente, die mit einem Ende an dem Fahrzeugrumpf (Grundkörper) und mit dem anderen Ende an der Fahrzeugkabine angelenkt sind und einen Winkel miteinander einschließen, eine geschlossene kinematische Kette.

Es sind vorzugsweise drei Paare derartiger Ketten vorgesehen. Die Verbindungselemente einer Kette sind nicht senkrecht und parallel zueinander ausgerichtet, sondern schließen mit der Horizontalen und miteinander jeweils bestimmte Winkel ein. Die erfindungsgemäße Anordnung der Verbindungselemente macht es möglich, unterschiedliche Bewegungs- und Schwingungskomponenten voneinander zu isolieren, d. h. federungs- bzw. schwingungstechnisch zu entkoppeln. Für die unterschiedlichen Bewegungs- und Schwingungskomponenten können jeweils geeignete Feder- bzw. Schwingungseigenschaften der erfindungsgemäßen Kabinenfederung eingestellt werden. So lassen sich beispielsweise den beim Bremsen oder Beschleunigen auftretenden Nickbewegungen, den bei Fahrten über Unebenheiten auftretenden Hub-, Senk- und Wankbewegungen sowie den Drehbewegungen um die Kabinenachsen unterschiedliche Federeigenschaften zuordnen. Es lassen sich beispielsweise Steifigkeiten einstellen, die eine gleiche Größenordnung in vertikaler Richtung und in den horizontalen Richtungen einnehmen.

Die Verbindungselemente einer geschlossenen Kette konvergieren. Die Wirkungslinien (Achsen) der Verbindungselemente unterschiedlicher geschlossener Ketten schneiden sich vorzugsweise in unterschiedlichen Konvergenzpunkten. Es ist vorteilhaft, wenn diese Konvergenzpunkte zwei Dreiecke bilden, zwischen welchen der Kabinenschwerpunkt oder die Augenhöhe der Bedienungsperson liegt. Hierdurch können Wankbewegungen gering gehalten und der Fahrkomfort erhöht werden. Dieses Konvergenzkriterium ist besonders bei passiver Federung von Vorteil. Bei aktiver Federung kann ein entsprechender Ausgleich durch aktive Ansteuerung erfolgen, so dass hier das Konvergenzkriterium von geringerer Bedeutung ist.

Grundsätzlich können zusätzlich zu den in ihrer Länge verstellbaren Verbindungselementen auch starre Lenker zwischen dem Fahrzeugchassis und der Fahrzeugkabine angeordnet werden, um gegebenenfalls die Anordnung zu stabilisieren. Hierdurch nimmt man jedoch eine Reduktion der Freiheitsgrade in Kauf. Weiterhin kann die Kabine durch zusätzliche Maßnahmen (z.B. mechanische Ketten neben jedem Federbein) im Kippfall festgehalten werden. Durch diese Maßnahmen werden die Freiheitsgrade nicht beeinflusst. Es ist daher von besonderem Vorteil, wenn sich die Fahrzeugkabine ausschließlich über Verbindungselemente, die in ihrer Länge verstellbar sind, an dem Fahrzeugchassis abstützt. Damit lässt sich eine uneingeschränkte räumliche Schwingungstilgung und Verstellung der Fahrzeugkabine realisieren.

Die Verbindungselemente sind vorzugsweise nach dem Prinzip eines Hexapoden angeordnet. Unter Hexapoden versteht man eine besondere Anordnung von sechs längenveränderlichen Verbindungselementen (Beinen), wie sie im Zusammenhang mit einem Verfahren zur Steuerung eines motorischen Koordinatenmessgerätes in der DE-A-197 20 049 und im Zusammenhang mit der Beschreibung von Roboterkinematiken in dem Industriemagazin "Maschinenmarkt", Würzburg 105 (1999) 21, Seite 44 beschrieben wurde. Hexapoden weisen ausschließlich geschlossene Ketten mit jeweils zwei Verbindungselementen auf, die den Verbindungselementen der vorliegenden Erfindung entsprechen.

Je nach Auswahl der geometrischen Maße des Hexapoden, d. h. in Abhängigkeit der Abmessungen, Abstände und Winkeln zwischen den als Federungselemente ausgebildeten Verbindungselementen lässt sich die Federungsweichheit der Fahrzeugkabine einstellen. Je stärker das Federungselement aus der Vertikalen ausgelenkt ist, desto geringer ist seine Federungssteifheit in vertikaler Richtung und desto höher ist seine Federungssteifheit in derjenigen horizontalen Querrichtung, in die das Federungselement ausgelenkt ist.

Auch die Auswahl der rahmenseitigen und kabinenseitigen Angriffspunkte der Verbindungselemente ist für das Federungsverhalten von großer Bedeutung. Die Angriffspunkte müssen auf den jeweiligen Anwendungsfall angepasst werden. Es ist von Vorteil die Angriffspunkte in den Eckpunkten geometrischer Figuren, beispielsweise Dreieck, Viereck, Trapez oder Sechseck, vorzusehen. Eine bevorzugte geometrische Figur ist das Sechseck, das nicht notwendiger Weise gleichseitig zu sein braucht. Die Angriffspunkte können auch auf Kreisen liegen. Um ein identisches Verhalten hinsichtlich der beiden Fahrzeugseiten zu gewährleisten, sollte die Anordnung der Angriffspunkte hinsichtlich der Fahrzeuglängsachse symmetrisch sein.

Die kabinenseitigen bzw. die rahmenseitigen Anlenkpunkte der Verbindungselemente können jeweils in einer Ebene liegen, wie es im nachfolgenden Ausführungsbeispiel gezeigt ist. Diese Anordnung in einer einzigen Ebene ist jedoch nicht zwingend erforderlich.

Die Anordnung der Verbindungselemente wird vorzugsweise so gewählt, dass sie lediglich auf Druck oder Zug beansprucht werden. Sie sind nur in ihrer längsverlaufenden Wirkungslinie verstellbar. In Querrichtung geben sie nicht, oder nicht wesentlich nach. Das heißt, eine nennenswerte Federauslenkung oder Verstellung quer zur längsverlaufenden Wirkungslinie der Verbindungselemente ist nicht möglich.

Die Verbindungselemente können zwischen dem Rahmen und der Fahrzeugkabine derart angeordnet sein, dass sie auf Druck beansprucht werden und die Fahrzeugkabine abstützen. Hierbei "steht" die Fahrzeugkabine auf den Verbindungselementen.

Es kann jedoch auch vorteilhaft sein, dass die Verbindungselemente infolge des Kabinengewichts auf Zug bzw. Dehnung beansprucht werden, so dass die Fahrzeugkabine an den Verbindungselementen "hängt".

Die Verbindungselemente können einerseits als passive Bauelemente ausgebildet sein, welche auf Grund äußerer Kräfte mit einer Längenänderung reagieren. Andererseits kann es auch vorteilhaft sein, aktive Federelemente zu verwenden, deren Länge sich durch eine Steuereinrichtung einstellen lässt und die aktiv auf Schwingungen und Vibrationen reagieren und diese dämpfen können.

Die passiven Verbindungselemente können mechanische Feder-Dämpfer-Elemente enthalten, die eine Kombination aus mechanischer Feder und Dämpfer darstellen. Die Feder isoliert mittlere oder höherfrequente Schwingungen, während der Dämpfer Schwingungen dämpft, in dem kinetische Energie in Wärmeenergie umgewandelt wird. In derartigen Federungssystemen sind die Dämpfer vorzugsweise parallel zu den Federn angeordnet. Als passives mechanisches Feder-Dämpfer-Element kann ein übliches Federbein mit Stoßdämpfer und Schraubenfeder dienen, welche konzentrisch zueinander angeordnet sind und parallel wirken. Es kommen auch hydropneumatische Feder-Dämpfer-Elemente in Betracht, bei denen eine Anordnung mit Hydraulikzylinder und Druckspeicher verwendet wird. Die Dämpfungseigenschaft dieser Anordnung lässt sich beispielsweise durch Drosseln regulieren. Hierfür kann eine feste Drossel ausgewählt werden oder es kann an Stelle der Drossel ein Hydraulikventil mit einstellbarer Drosselwirkung verwendet werden. Die Federungseigenschaft lässt sich durch die Wahl der nach dem Federungswiderstand verschiedenen Druckspeichern einstellen. Bei einstellbaren Druckspeichern lässt sich die Federungsweichheit durch den Vordruck im hydropneumatischen Druckspeicher (durch Vorspannung der Membrane) regulieren. Das hydropneumatische Feder-Dampfer-Element bietet eine variable Niveauregulierung durch Ein- und Auslassen der Hydraulikflüssigkeit. Die mechanischen Federbeine und die hydropneumatischen Elemente können ähnlich ausgestaltet sein wie die bei der Fahrwerkaufhängung von Kraftfahrzeugen verwendeten bekannten Bauelemente (Dubbel Taschenbuch für den Maschinenbau, 18. Auflage, Springer-Verlag Berlin Heidelberg New York).

Die Feder-Dämpfer-Elemente mit in der Regel konstanten Federund Dämpfungseigenschaften (konstante Federungsweichheit) werden entsprechend den jeweiligen Anforderungen ausgewählt. Die gewünschte Federungsweichheit der Kabine wird einerseits auf konventionelle Weise durch die Beeinflussung der Federund/oder Dämpferwiderstandskraft des Feder-Dämpfer-Elements und andererseits durch die der vorliegenden Erfindung zugrunde liegende geometrische Anordnung der Feder-Dämpfer-Elemente erreicht.

Die aktiven Verbindungselemente können beispielsweise Hydraulikzylinder oder elektromechanische Verstellelemente enthalten. Hierbei ist die Verwendung von mechanischen Schraubenfedern und dergleichen nicht erforderlich. Als Hydraulikzylinder eignen sich insbesondere doppelseitig wirkende Hydraulikzylinder. Diese werden durch mit einer Druckquelle in Verbindung stehende Steuerventile betätigt, die ihrerseits durch eine Steuereinrichtung angesteuert werden. Um Schwingungen und Vibrationen zu dämpfen, erfolgt die Steuerung der aktiven Verbindungselemente aufgrund der Signale von Beschleunigungssensoren. Bei Verwendung von Hydraulikzylindern lässt sich die von einem Hydraulikzylinder aufgenommene Kraft durch Kraftmessbolzen oder Drucksensoren messen und für die Regelung heranziehen. Es können auch die Zylinderhübe gemessen werden. Bei der Steuerung der aktiven Verbindungselemente können die Steuerverfahren, die für die Steuerung von Hexapoden entwickelt wurden, angewendet werden.

Aktive Verbindungselemente ermöglichen neben der Schwingungstilgung auch eine Relativeinstellung zwischen Fahrzeugchassis und Fahrzeugkabine, so dass sich Schrägpositionen des Arbeitsfahrzeugs ausgleichen lassen und die Kabine ihre horizontale Lage beibehält, auch wenn sich das Fahrzeug über unebenes Terrain, z. B. am Hang, bewegt. Die Verstellung der Verbindungselemente kann hierbei entweder manuell durch die Bedienungsperson oder automatisch erfolgen. Bei der automatischen Verstellung können beispielsweise Neigungssensoren zur Ermittlung der Kabinenneigung gegenüber der Horizontalen verwendet werden, wie er in der US-A-6,273,203 beschrieben ist.

Es ist von Vorteil, die Verbindungselemente nicht unmittelbar an der Kabinenstruktur anzulenken, sondern an einem Zwischenrahmen, auf dem die Kabinenstruktur lösbar aufgesetzt ist. Dies erleichtert die Montage der Fahrzeugkabine auf dem Fahrzeugchassis. Darüber hinaus ist es möglich für Reparaturarbeiten, die Fahrzeugkabine vom Fahrzeugchassis abzuheben, ohne die Anlenkstellen der Verbindungselemente zu lösen.

Hierbei ist es von besonderem Vorteil, den Zwischenrahmen über eine Scharnierverbindung mit der Kabinenstruktur zu verbinden, so dass sich die Fahrzeugkabine gegenüber dem Zwischenrahmen und damit auch gegenüber dem Fahrzeugchassis verkippen lässt um einen einfachen Zugang zu unter der Fahrzeugkabine liegende Komponenten zu ermöglichen. Die Scharnierverbindung kann in Fahrzeuglängsrichtung oder Fahrzeugquerrichtung verlaufen, so dass sich die Fahrzeugkabine bezüglich des Fahrzeugs entweder seitlich oder nach vorn bzw. nach hinten verkippen lässt.

Durch die erfindungsgemäße Kabinenlagerung lässt sich bei vergleichsweise geringem technischen und finanziellen Aufwand eine Federung der Fahrzeugkabine hinsichtlich aller räumlicher Achsen realisieren, durch die sich der Fahrkomfort erheblich steigern und ein sicherer Kontakt zwischen der Bedienungsperson und den Bedienungselementen gewährleisten lässt. Die Kabinenlagerung ermöglicht eine modulare Ausbildung, indem alle Verbindungselemente und gegebenenfalls die zugehörigen Steuerelemente weitgehend identisch ausgebildet werden und sich somit gegeneinander austauschen lassen. Die erfindungsgemäße Kabinenlagerung ermöglicht sowohl eine passive als auch eine aktive Federung und darüber hinaus eine Niveaueinstellung und eine ständige Horizontalstellung der Fahrzeugkabine. Vibrationen lassen sich schwingungstechnisch sauber entkoppeln oder trennen.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die Seitenansicht eines Ackerschleppers mit einer erfindungsgemäßen Kabinenlagerung, bei der die Fahrzeugkabine auf den Verbindungselementen steht,
- Fig. 2: die Ansicht von oben des Fahrzeugs der Fig. 1,
- Fig. 3: die rückseitige Ansicht des Fahrzeugs der Fig. 1,
- Fig. 4: eine schematische perspektivische Ansicht der auf dem Fahrzeugrahmen gelagerten Fahrzeugkabine,
- Fig. 5: die Seitenansicht eines Ackerschleppers mit einer erfindungsgemäßen Kabinenlagerung, bei der die Fahrzeugkabine an den Verbindungselementen hängt,
- Fig. 6: die Ansicht von oben des Fahrzeugs der Fig. 5,
- Fig. 7: die rückseitige Ansicht des Fahrzeugs der Fig. 5,
- Fig. 8: die Seitenansicht eines Ackerschleppers mit einer erfindungsgemäßen Kabinenlagerung, für eine kippbare Kabine,
- Fig. 9: die Ansicht von oben des Fahrzeugs der Fig. 8,
- Fig. 10: die rückseitige Ansicht des Fahrzeugs der Fig. 8, mit ungekippter Fahrzeugkabine,
- Fig. 11: die Ansicht von oben des Fahrzeugs der Fig. 8, mit gekippter Fahrzeugkabine,
- Fig. 12: die schematische Ansicht eines passiven mechanisch-hydraulischen Federbeins,
- Fig. 13: die schematische Ansicht eines passiven hydropneumatischen Federbeins und
- Fig. 14: die schematische Ansicht eines aktiven hydraulischen Federbeins.

In der Zeichnung wird für gleiche, oder für gleichartige Bauteile jeweils die selbe Bezugsziffer verwendet.

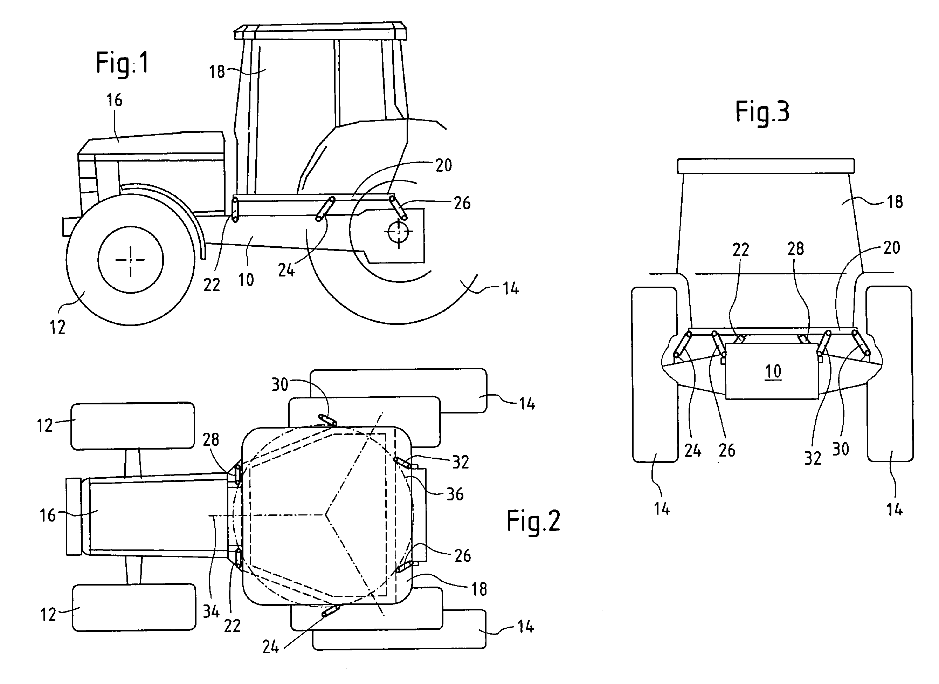

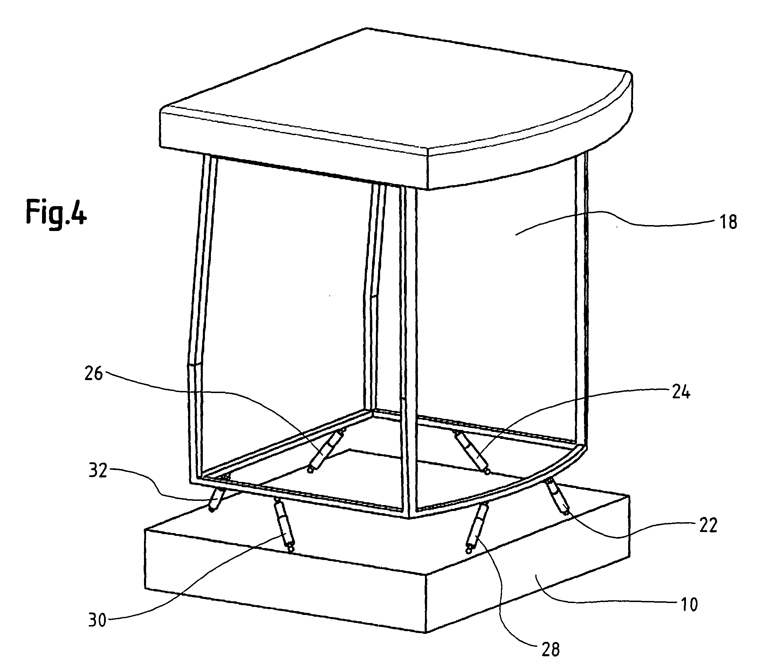

Aus den Figuren 1 bis 11 geht jeweils ein Ackerschlepper hervor, der ein Fahrzeugchassis 10 aufweist, an dem die Vorderräder 12 und die Hinterräder 14 montiert sind. Bei dem Fahrzeugchassis 10 kann es sich, wie dargestellt, um einen Fahrzeugrahmen handeln. Bei einem in Blockbauweise ausgeführten Ackerschlepper übernehmen das Motor- und das Getriebegehäuse die Aufgabe des Fahrzeugchassis. Das Fahrzeugchassis 10 trägt im vorderen Bereich des Fahrzeugs einen unter einer Motorhaube 16 angeordneten Antriebsmotor mit den zugehörigen Komponenten. Im hinteren Bereich des Fahrzeugs befindet sich eine Fahrzeugkabine 18. Diese ist auf einem Bodenrahmen 20 aufgebaut.

Wie aus den Figuren 1 bis 4 hervorgeht, sind zwischen dem Fahrzeugchassis 10 und dem Bodenrahmen 20 der Fahrzeugkabine sechs Verbindungselemente 22, 24, 26, 28, 30, 32 angeordnet. Diese sind mit ihrem jeweils unteren Ende gelenkig an dem Fahrzeugchassis 10 und mit ihrem jeweils oberen Ende gelenkig an dem Bodenrahmen 20 angelenkt. Die Fahrzeugkabine 18 belastet damit die Verbindungselemente 22, 24, 26, 28, 30, 32 auf Druck. Bei den Gelenkstellen handelt es sich um Kreuzgelenke, so dass sich die Verbindungselemente 22, 24, 26, 28, 30, 32 beliebig gegenüber dem Fahrzeugchassis 10 bzw. dem Bodenrahmen 20 verschwenken lassen.

Wie aus Fig. 2 ersichtlich, sind die Verbindungselemente 22, 24, 26, 28, 30, 32 hinsichtlich der Fahrzeuglängsachse 34 symmetrisch angeordnet, wobei sich auf jeder Fahrzeugseite je drei Verbindungselemente 22, 24, 26, 28, 30, 32 befinden. Es gibt zwei im vorderen Bereich der Fahrzeugkabine angeordnete Verbindungselemente 22, 28, zwei an den Seiten der Fahrzeugkabine angeordnete Verbindungselemente 24, 30 und zwei im hinteren Bereich der Fahrzeugkabine angeordnete Verbindungselemente 26, 32. Die Verbindungselemente 22, 24, 26, 28, 30, 32 sind nicht vertikal ausgerichtet, sondern gegenüber der Vertikalen geneigt. Die Wirkungslinien oder Achsen jeweils zweier Verbindungselemente 22 und 28, 24 und 26, 30 und 32 verlaufen V-förmig zueinander, wobei die jeweilige Spitze des V oben liegt und einen Konvergenzpunkt bilden, der jedoch in den Figuren 1 bis 4 nicht hervorgehoben ist. Die kabinenseitigen Anlenkpunkte der Verbindungselemente 22, 24, 26, 28, 30, 32 liegen auf einem Kreis 36, wie es aus Fig. 2 hervorgeht. Die Verbindungselemente 22, 24, 26, 28, 30, 32 sind in geschlossenen kinematischen Ketten, insbesondere nach Art eines Hexapoden angeordnet.

Bei den Verbindungselementen 22, 24, 26, 28, 30, 32 der Figuren 1 bis 4 kann es sich um passive Federdämpfungselemente oder um aktive Verstellelemente handeln.

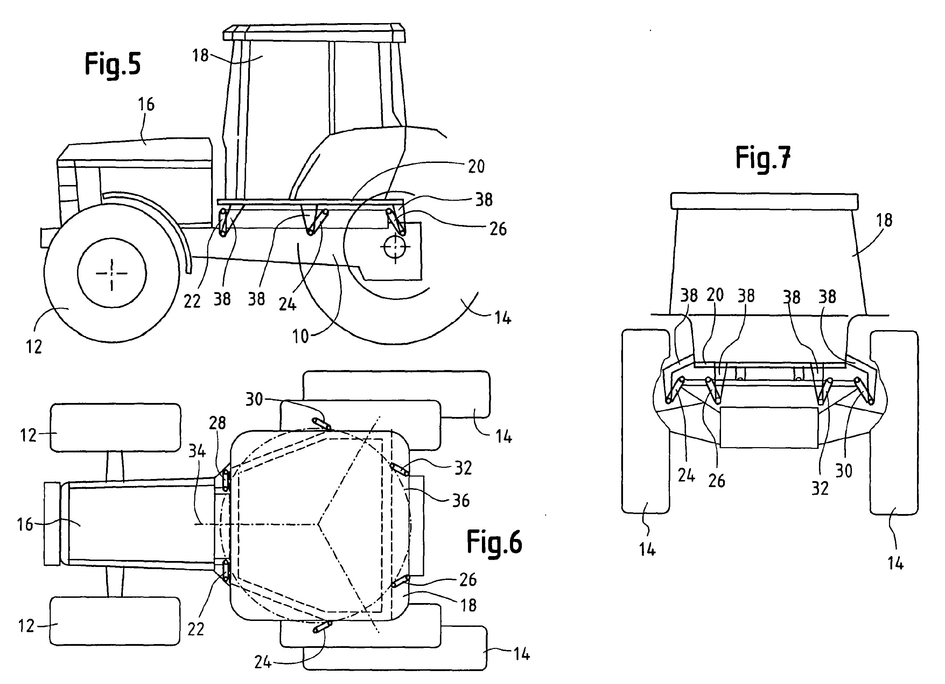

Die in den Figuren 5 bis 7 dargestellte Kabinenlagerung unterscheidet sich von der Kabinenlagerung gemäß der Figuren 1 bis 3 im Wesentlichen durch die Art der Kabinenaufhängung. Gemäß der Figuren 5 bis 7 sind die unteren Enden der Verbindungselemente 22, 24, 26, 28, 30, 32 an nach unten vorstehende Laschen 38 des Kabinenrahmens angelenkt, während die oberen Enden der Verbindungselemente 22, 24, 26, 28, 30, 32 an dem Fahrzeugchassis angelenkt sind. Damit werden die Verbindungselemente 22, 24, 26, 28, 30, 32 im Gegensatz zu der Ausführung gemäß der Figuren 1 bis 4 nicht auf Druck beansprucht sondern auf Zug oder Dehnung.

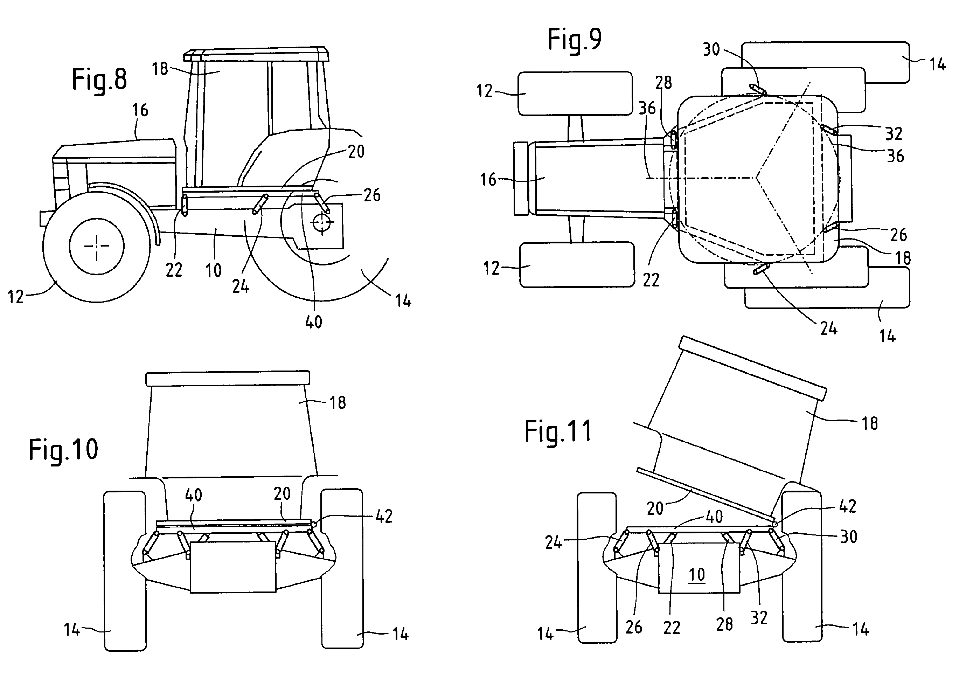

Die Ausgestaltung der Figuren 8 bis 11 ähnelt der in den Figuren 1 bis 3 dargestellten Ausgestaltung. Allerdings sind gemäß der Figuren 8 bis 11 die oberen Enden der Verbindungselemente 22, 24, 26, 28, 30, 32 nicht am Bodenrahmen 20 der Fahrzeugkabine 18 angelenkt sondern an einem starren Zwischenrahmen 40. Der Zwischenrahmen 40 steht über eine seitliche in Fahrzeuglängsrichtung ausgerichtete Scharnierverbindung 42 mit dem Bodenrahmen 20 derart in Verbindung, dass sich die Fahrzeugkabine 18 seitlich aus der in Fig. 10 dargestellten Grundposition in eine angehobene und gekippte Position verkippen lässt, wie es in Fig. 11 gezeigt ist. Wenn sich die Fahrzeugkabine 18 in ihrer Grundposition (Fig. 10) befindet, ist der Zwischenrahmen 40 am Bodenrahmen 20 durch nicht näher dargestellte Verriegelungsmittel festgelegt.

Auch bei den in den Figuren 5 bis 7 bzw. den Figuren 8 bis 11 gezeigten Verbindungselementen 22, 24, 26, 28, 30, 32 kann es sich um passive Federdämpfungselemente oder um aktive Verstellelemente handeln.

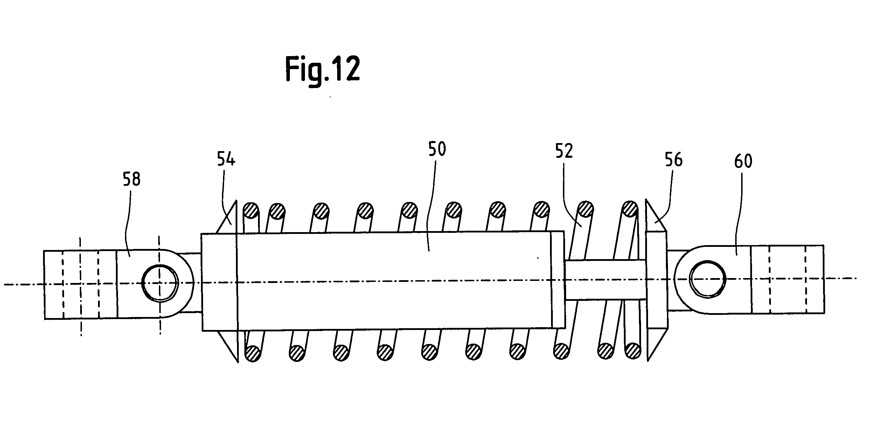

Als passives Verbindungselement 22, 24, 26, 28, 30, 32 kann ein übliches passives mechanisch-hydraulisches Federbein verwendet werden, wie es aus Fig. 12 hervorgeht. Hierbei ist konzentrisch zu einem Stoßdämpfer 50 eine Schraubenfeder 52 angeordnet. Die Schraubenfeder 52 ist zwischen zwei Scheiben 54, 56 eingespannt und wirkt bei einer "stehenden" Anordnung, bei der die Verbindungselemente auf Druck beansprucht werden, als Druckfeder. Bei einer "hängenden" Anordnung, bei der die Verbindungselemente auf Zug beansprucht werden, werden hingegen Zugfedern verwendet, deren Enden an den Scheiben 54, 56 festgelegt sind. An jeder Scheibe 54, 56 ist ein Kreuzgelenk 58, 60 montiert, welches seinerseits an dem Fahrzeugchassis 10, dem Bodenrahmen 20 oder dem Zwischenrahmen 40 angelenkt ist. An Stelle der Kreuzgelenke können auch übliche Kugelgelenke verwendet werden.

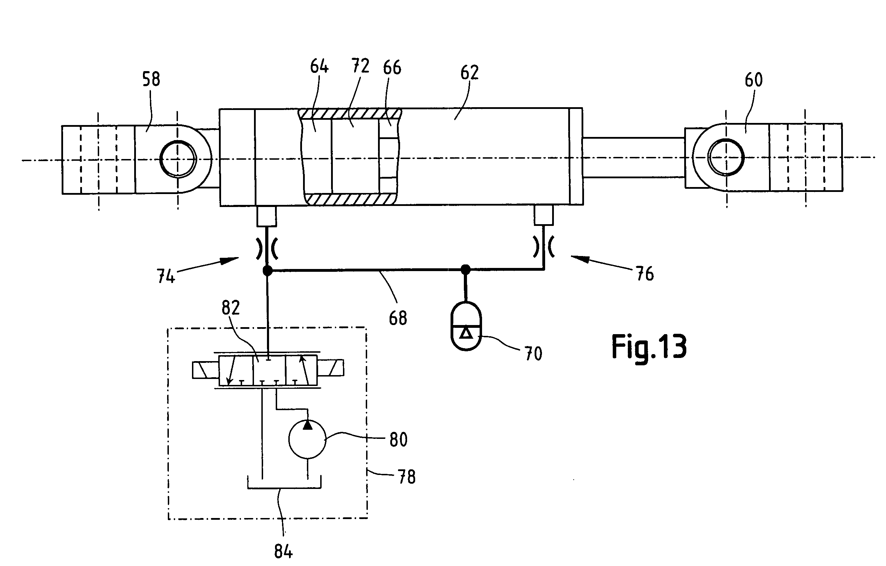

Ein anderes passives hydropneumatisches Federbein ist in Fig. 13 dargestellt. Hier ist zwischen zwei Kreuzgelenken 58, 60 ein Hydraulikzylinder 62 angeordnet, dessen beide Kammern 64, 66 über eine Leitung 68 miteinander in Verbindung stehen. An die Leitung 68 ist ein Druckspeicher 70 angeschlossen, der es ermöglicht, dass sich der Kolben 72 trotz der unterschiedlichen Querschnitte des Kolbenraums 64 und des Ringraums 66 gegen die Vorspannkraft des Druckspeichers 70 gefedert bewegen kann. In der Leitung 68 befinden sich zwei Drosseln 74, 76, welche die gefederte Bewegungen des Kolbens 72 dämpfen. Durch Auswahl geeigneter Drosseln lässt sich die Dämpfungseigenschaft einstellen. Des Weiteren ist an die Leitung 68 eine Niveaueinstellvorrichtung 78, welche im Wesentlichen eine Druckquelle 80 und ein elektromagnetisch betätigbares 3/3-Wegeventil 82 enthält. Durch Ansteuerung des Wegeventils 82 kann die Leitung 68 wahlweise mit einer Druckquelle 80 oder mit einem drucklosen Vorratsbehälter 84 verbunden oder geschlossen werden. Das Wegeventil 82 lässt sich mit Hilfe der Signale eines nicht gezeigten Positionssensors, der den Abstand zwischen der Kabine 18 und dem Chassis 10 erfasst, derart ansteuern, dass trotz einer Änderung der Kabinenbelastung die Kabine 18 eine Mittellage einhält und somit immer der maximal mögliche Federweg zur Verfügung steht. Andererseits lässt durch individuelle Einstellung der Drücke in den hydropneumatischen Verbindungselementen die Funktion der Horizontaleinstellung der Kabine realisieren.

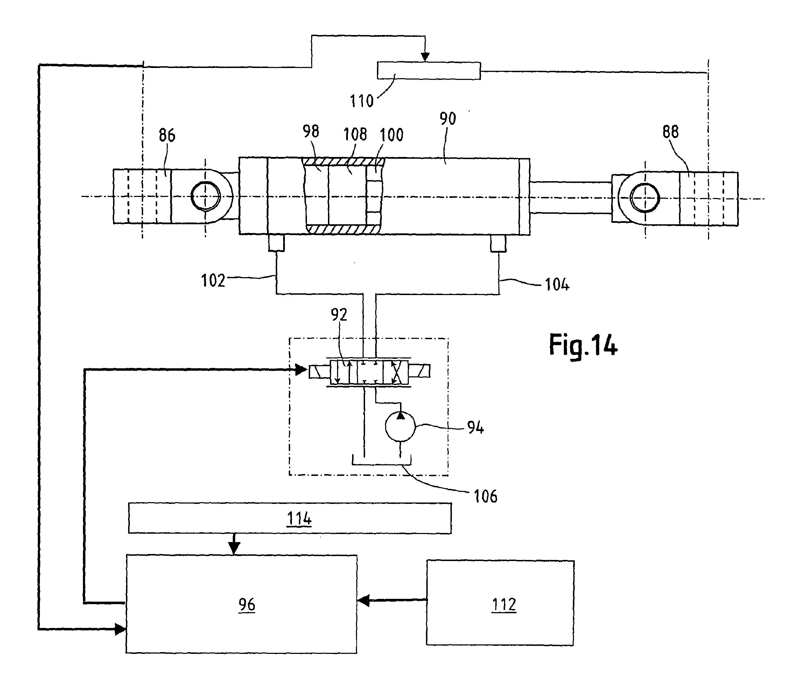

Als Verstellelemente 22, 24, 26, 28, 30, 32 können auch aktive Federbeine verwendet werden, bei denen die Feder- und Dämpfungseigenschaften durch eine gemeinsame Steuereinrichtung erzeugt werden. Fig. 14 zeigt ein aktives hydraulisches Federbein, welches im Wesentlichen einen zwischen zwei Kreuzgelenken 86, 88 angeordneten Hydraulikzylinder 90, ein elektromagnetisch ansteuerbares 4/3-Proportionalwegeventil 92 und eine Druckquelle 94 enthält. Das Proportionalventil 92 wird durch eine elektronische Steuereinrichtung 96 betätigt. Die Zuleitungen 102, 104 zu den beiden Kammern 98, 100 des Hydraulikzylinders 90 werden durch das Proportionalventil 92 wahlweise mit dem Ausgang der Druckquelle 94 oder mit einem drucklosen Vorratsbehälter 106 verbunden oder hermetisch verschlossen. Damit lässt sich die Lage des Kolbens 108 innerhalb des Hydraulikzylinders 90 beliebig einstellen.

Durch potentiometrische Wegmesssysteme 110, die jedem Verstellelement zugeordnet sind, wird die relative Lage der Kabine 18 zum Fahrzeugrumpf 20 jeweils am Ort der Verstellelemente laufend erfasst. Zum besseren Verständnis ist in Fig. 14 eines der Wegmesssysteme 110 schematisch angedeutet, welches den Abstand zwischen den Anlenkachsen der Kreuzgelenke 86, 88 erfasst. Vorzugsweise werden jedoch Wegsensoren verwendet, die in den Hydraulikzylinder 90 integriert sind. Des Weiteren ist auch wenigstens ein räumlicher Beschleunigungssensor 112 vorgesehen, durch den Beschleunigungen der Fahrzeugkabine 18 erfasst und in elektrische Signale umgewandelt werden. Es können auch nicht dargestellte Neigungssensoren vorgesehen sein. Über eine Bedienungseinrichtung 114 kann die Bedienungsperson Einstellungen vornehmen, und beispielsweise eine Aktivierung und Deaktivierung der Kabinenfederung und/oder eines automatischen Hangausgleichs vornehmen.

Die Signale des Wegmesssystems 110, des Beschleunigungssensors 112, der Bedienungseinrichtung 114 und weiterer Sensoren werden durch eine gemeinsame Steuereinrichtung 96 ausgewertet, um aktiv den Beschleunigungen der Fahrzeugkabine 18 entgegenzuwirken. Die Steuereinrichtung 96 gibt Signale an alle den Verstellelementen zugeordneten Proportionalsteuerventile 92 ab, um die Hydraulikzylinder 90 entsprechend zu verstellen. Wenn der in der Fahrzeugkabine 18 angeordnete Beschleunigungssensor 112 eine Beschleunigung in eine der drei Richtungen erfasst, so wird die Fahrzeugkabine 18 durch die sechs Hydraulikzylinder 90 in Gegenrichtung verstellt.

Beispielsweise wird bei einem Stoß nach links die Fahrzeugkabine 18 nach rechts und bei einem Stoß nach oben die Fahrzeugkabine nach unten verstellt. Durch diese Ausgleichsbewegung muss die Bedienungsperson nicht die vollen Stoßhübe erleiden. Es können an die Leitungen 102, 104 auch nicht dargestellte Druckspeicher für weichere Übergänge angeschlossen sein. Die Berücksichtigung der Signale der Wegmesssysteme ermöglicht insbesondere eine waagerechte Ausrichtung (Hangausgleich) der Fahrzeugkabine, wenn sich das Fahrzeug auf schrägem Gelände befindet.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Kabinenlagerung zur schwingungsgedämpften und/oder zur verstellbaren Abstützung einer Fahrzeugkabine (18) auf einem Fahrzeugchassis (10) mit mehreren als Federdämpfungselemente und/oder Verstellelemente ausgebildeten, in ihrer Länge veränderlichen Verbindungselementen (22, 24, 26, 28, 30, 32), **dadurch gekennzeichnet, dass** sich die Fahrzeugkabine (18) über mindestens sechs Verbindungselemente (22, 24, 26, 28, 30, 32), deren jeweils erstes Ende gelenkig mit dem Fahrzeugchassis (10) und deren jeweils zweites Ende gelenkig mit der Fahrzeugkabine (18) in Verbindung steht, an dem Fahrzeugchassis (10) abstützt, wobei die Verbindungselemente (22, 24, 26, 28, 30, 32) in geschlossenen kinematischen Ketten und in Gruppen von jeweils wenigstens zwei konvergent zueinander ausgerichteten Verbindungselementen (22, 24, 26, 28, 30, 32) derart angeordnet sind, dass eine aktive und/oder passive Federdämpfung der Fahrzeugkabine (18) in sechs Freiheitsgraden möglich ist.

2. Kabinenlagerung nach Anspruch 1, **dadurch gekennzeichnet, dass** die Wirkungslinien der Verbindungselemente (22, 24, 26, 28, 30, 32) einer geschlossenen kinematischen Kette nach oben zu einem Konvergenzpunkt zusammenlaufen.

3. Kabinenlagerung nach Anspruch 1 oder 2, **dadurch gekennzeichnet, dass** sich die Fahrzeugkabine (18) ausschließlich über in ihrer Länge verstellbare Verbindungselemente (22, 24, 26, 28, 30, 32) an dem Fahrzeugchassis (10) abstützt.

4. Kabinenlagerung nach einem der vorstehenden Ansprüche, **dadurch gekennzeichnet, dass** die Verbindungselemente (22, 24, 26, 28, 30, 32) nach Art eines Hexapoden angeordnet sind.

5. Kabinenlagerung nach einem der vorstehenden Ansprüche, **dadurch gekennzeichnet, dass** die Verbindungselemente (22, 24, 26, 28, 30, 32) rahmenseitig und/oder kabinenseitig in etwa in den Eckpunkten von geometrischen Figuren, wie Dreieck, Viereck, Trapez oder Sechseck, angreifen.

6. Kabinenlagerung nach einem der vorstehenden Ansprüche, **dadurch gekennzeichnet, dass** die Verbindungselemente (22, 24, 26, 28, 30, 32) infolge des Kabinengewichts auf Druck beansprucht werden.

7. Kabinenlagerung nach einem der Ansprüche 1 bis 5, **dadurch gekennzeichnet, dass** die Verbindungselemente (22, 24, 26, 28, 30, 32) infolge des Kabinengewichts auf Zug beansprucht werden.

8. Kabinenlagerung nach einem der vorhergehenden Ansprüche, **dadurch gekennzeichnet, dass** wenigstens ein Verbindungselement (22, 24, 26, 28, 30, 32) als passives Bauelement ausgebildet ist und vorzugsweise ein Feder-Dämpfer-Element enthält.

9. Kabinenlagerung nach einem der vorhergehenden Ansprüche, **dadurch gekennzeichnet, dass** die Länge wenigstens eines Verbindungselements (22, 24, 26, 28, 30, 32) aktiv verstellbar ist.

10. Kabinenlagerung nach einem der vorhergehenden Ansprüche, **dadurch gekennzeichnet, dass** wenigstens ein Verbindungselement (22, 24, 26, 28, 30, 32) einen Hydraulikzylinder (62, 90), insbesondere einen doppelseitig wirkenden Hydraulikzylinder, und/oder wenigstens ein elektromechanisches Verstellelement enthält.

11. Kabinenlagerung nach einem der vorhergehenden Ansprüche, **dadurch gekennzeichnet, dass** wenigstens ein Verbindungselement (22, 24, 26, 28, 30, 32) in der Länge derart aktiv verstellbar ist, dass unabhängig von der Schrägposition des Arbeitsfahrzeuges die Fahrzeugkabine (18) ihre horizontale Lage im Wesentlichen beibehält.

12. Kabinenlagerung nach einem der vorstehenden Ansprüche, **dadurch gekennzeichnet, dass** die Verbindungselemente (22, 24, 26, 28, 30, 32) kabinenseitig an einem starren Rahmen (40), der mit der Kabinenstruktur (20) in einer lösbaren Verbindung steht, angelenkt sind.

13. Kabinenlagerung nach Anspruch 12, **dadurch gekennzeichnet, dass** zwischen dem Rahmen (40) und der Kabinenstruktur (20) eine Scharnierverbindung (42) vorgesehen ist, die das Kippen der Fahrzeugkabine (18) gegenüber dem Rahmen (40) ermöglicht.
